# EUROPEAN PATENT APPLICATION

(11) **EP 3 185 112 A1**
(43) Date of publication of application: **28.06.2017**
(21) Application number: 16203890.5
(22) Date of filing: 13.12.2016
(51) Int. Cl.: G06F 3/0481, G06F 9/44, B60W 50/14, B60W 50/08, G06F 3/14

(54) **SYSTEM FOR CONFIGURING A HUMAN MACHINE INTERFACE ON MULTIPLE DISPLAYS**

(30) Priority: 21.12.2015 US 201562270358 P; 14.11.2016 US 201615350682
(71) Applicant: Delphi Technologies, Inc., Troy, MI 48007 (US)
(72) Inventor: AGILI, Sriranga K., Kokomo, Indiana 46902 (US); KADY, Mark, A., Greentown, Indiana 46936 (US); SALE, Devin, M., Carmel, Indiana 46033 (US)
(74) Representative: Delphi France SAS

(57) **Abstract**

A system (10) for operating a display (12) as a Human Machine Interface suitable to use in an automated vehicle includes a display (12) and a controller (20). The display (12) is positioned in a vehicle so as to be viewable by an occupant of the vehicle, said display (12) characterized by a display-resolution (14) and a display-size (16). The controller (20) is in communication with the display (12). The controller (20) is configured to determine how many widgets (24) can be shown on the display (12) based on the display-size (16), determine a list of selected-widgets (24) from a list of possible-widgets (24), wherein each of the possible-widgets (24) is characterized by a critical-factor, and the selected-widgets (24) have a critical-factor greater than critical-threshold, determine a configuration of each selected-widget based on the display-resolution (14), wherein the configuration includes an aspect-ratio, and operate the display (12) to show the selected-widgets (24) to the occupant.

## Description

### TECHNICAL FIELD OF INVENTION

This disclosure generally relates to a system for configuring a display used as a Human Machine Interface (HMI), and more particularly relates to a system that optimizes the configuration of the display for the size and resolution of the display.

### BACKGROUND OF INVENTION

Currently, automotive human-machine interfaces (HMI's) are designed and developed for a specific display resolution and a specific display size. The design process is cumbersome and the designs are generally not re-usable. As such, every new display size and resolution needs new HMI implementation, and every new display size and resolution needs new graphical-assets designed specifically for a particular display. When a display changes from landscape to portrait, another implementation is needed. Furthermore, multiple applications for the same display require that every application be implemented at least twice to make it look right in various states. In general, no re-use from the existing HMI models is practiced. Finally, a HMI on a head unit cannot be rendered on remote brought-in device as the HMI is not designed for the remote device screen configuration.

### SUMMARY OF THE INVENTION

Described herein is a Runtime Rules Engine (RRE) Human-machine interface (HMI) system that renders an Automotive HMI on any display size and any display resolution without needing to manually re-layout anything on the HMI implementation. The RRE also enables automotive HMI's to be rendered on remote brought in devices such as smart-phones and tablets. With the RRE system, HMI's are developed with rules so that they can automatically scale with different display resolutions and different size without compromising the usability and quality of the HMI. For example, when a HMI is designed with rules for the landscape display orientation, the same HMI can be rendered on portrait display. Using the rules of the RRE, each HMI element re-sizes itself and graphical-assets are scaled so the HMI not only looks good, but it is also usable. Rules like minimum button sizes make sure HMI elements are not scaled to a level which make the HMI element unusable, e.g. too small to touch. Rules like criticality level of an HMI elements helps making sure that when HMI is scaled down, all elements which are not critical (low criticality) are dropped. The system then first fits and keep elements which are important (high criticality). Also, when the HMI is scaled down to the point where even all the important items with minimum size cannot fit, the system rearranges the critical elements of the HMI automatically. The RRE system is configured to determine which HMI elements should keep the aspect ratio of the graphical-assets rendered on it (example contact picture) as this ensures that icons are not squished or stretched. Using the RRE system, assets with different resolution can be used, and the RRE system makes sure that it picks the assets with the proper resolution for the screen type which keeps the quality to the highest level.

In accordance with one embodiment, a system for operating a display as a Human Machine Interface suitable to use in an automated vehicle is provided. The system includes a display and a controller. The display is positioned in a vehicle so as to be viewable by an occupant of the vehicle, said display characterized by a display-resolution and a display-size. The controller is in communication with the display. The controller is configured to determine how many widgets can be shown on the display based on the display-size, determine a list of selected-widgets from a list of possible-widgets, wherein each of the possible-widgets is characterized by a critical-factor, and the selected-widgets have a critical-factor greater than critical-threshold, determine a configuration of each selected-widget based on the display-resolution, wherein the configuration includes an aspect-ratio, and operate the display to show the selected-widgets to the occupant.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a diagram of a system for configuring a display as a Human Machine Interface in accordance with one embodiment;
Fig. 2 illustrates examples of content for a variety of displays operated by the system of Fig. 1 in accordance with one embodiment; and
Figs. 3A and 3B combined show a flowchart of a method of operating the system of Fig. 1 in accordance with one embodiment.

### DETAILED DESCRIPTION

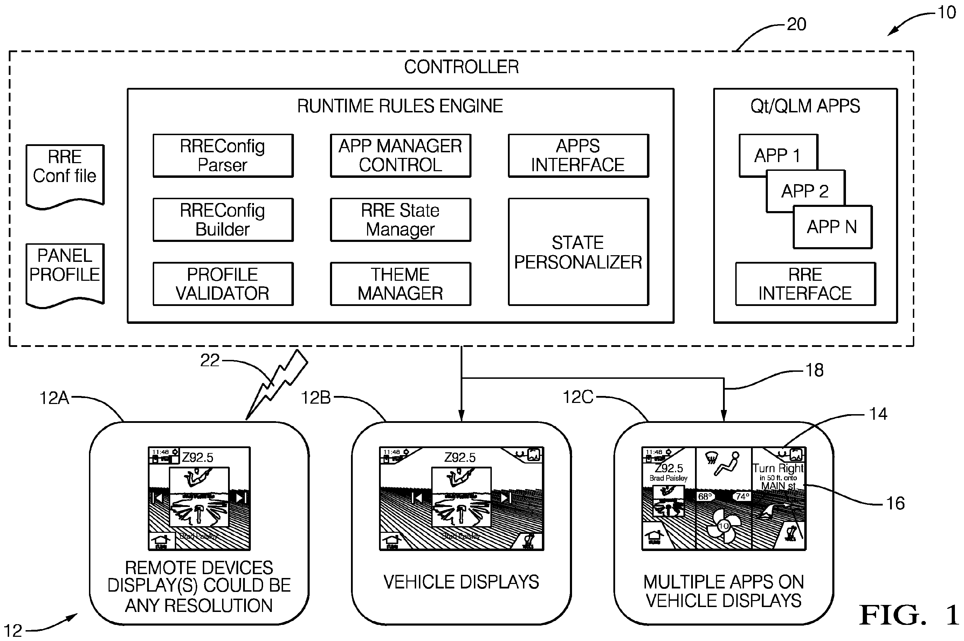

Fig. 1 illustrates a non-limiting example of a system 10 for operating a display 12 as a Human Machine Interface in a manner suitable to use in an automated vehicle (not shown). It is contemplated that the vehicle could be a fully-automated or autonomous vehicle where an operator or occupant (not shown) merely indicates a destination and does not do anything to directly operate the vehicle with regard to steering, acceleration, or braking. It is also contemplated that the vehicle could be partially automated where the system 10 only operates the vehicle during special circumstances, or merely provides an audible or visual warning to the operator to assist the operator when the operator is in complete control of the steering, acceleration, and braking of the vehicle.

The display 12 is generally positioned in the vehicle so as to be viewable by an occupant of the vehicle. Each instance of the display 12 characterized by a display-resolution 14 and a display-size 16. As will become clear in the description that follows, the system 10 is well adapted to providing a signal to the display 12 that is optimized for the display-resolution 14 and the display-size 16 of the particular instance of the display 12 being operated by the system 10. While three displays (12A, 12B, 12C) are illustrated, it is not a requirement that three displays must be present. Three displays are only show to highlight the ability of the system 10 to adapt to a variety of display types. By way of example and not limitation, the first-display 12A may be a smart-phone, tablet, or other personal computing device that has a display resolution of any available value and a display size of, for example, fifty-five millimeters (55mm) by ninety-five millimeters (95mm). The second-display 12B and the third-display 12C may be a built-in displays or portable (i.e. removable) display with any value of display resolution and any display size.

The system 10 includes a controller 20 in communication with the display 12. The communication between the controller 20 and the display may be by way of a wired connection, i.e. a display bus 18, or may be by way of wireless connection 22. The controller 20 may include a processor (not specifically shown) such as a microprocessor or other control circuitry such as analog and/or digital control circuitry including an application specific integrated circuit (ASIC) for processing data as should be evident to those in the art. The controller 20 may include memory (not specifically shown), including non-volatile memory, such as electrically erasable programmable read-only memory (EEPROM) for storing one or more routines, thresholds, and captured data. The one or more routines may be executed by the processor to perform steps for determining what signals should be sent to the display 12 for operating the display 12 in accordance with the limitations (e.g. the display-resolution 14 and the display-size 16) of the display 12 as described herein.

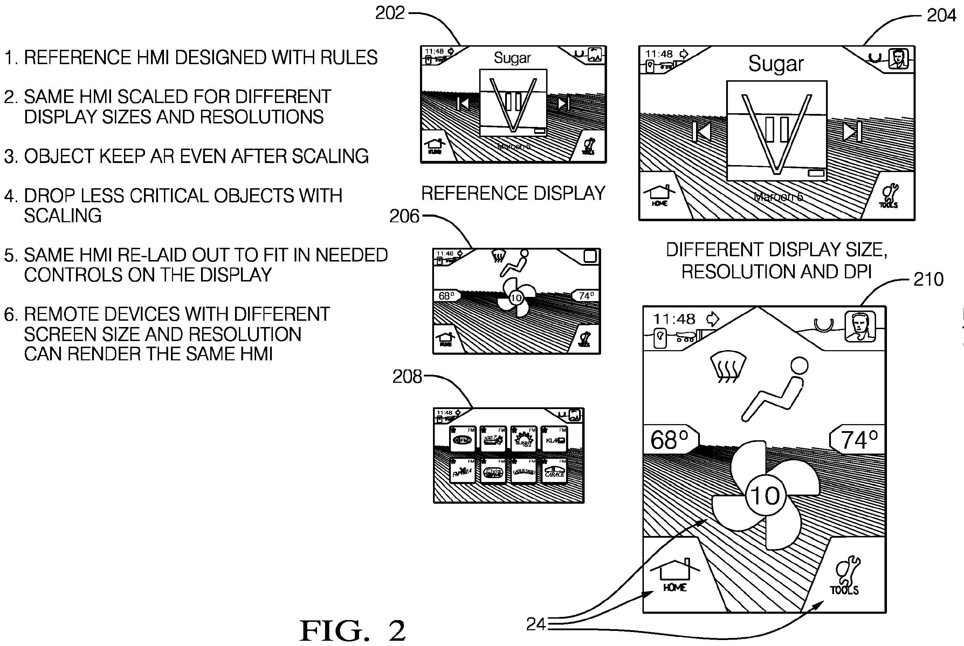

In general, the controller 20 is configured to determine how many widgets 24 (Fig. 2) can be shown on the display 12 based on the display-size 16. The controller 20 also generally configured to determine a list of selected-widgets from a list of possible-widgets, wherein each of the possible-widgets is characterized by a critical-factor, and the selected-widgets have a critical-factor greater than critical-threshold. The controller 20 also generally configured to determine a configuration of each selected-widget based on the display-resolution, wherein the configuration includes an aspect-ratio. The controller 20 also generally configured to operate the display 12 to show the selected-widgets to the occupant.

The operation of the controller 20 will now be described in terms of functional blocks illustrated in Fig. 1. The controller 20 includes a Runtime Rules Engine (RRE) block that is generally configured to automatically and intelligently render the target automotive HMI screen on any display without compromising the quality or usability. The RRE system uses predefined rules for each HMI element to resize / reposition, or eliminate it from the display. Example rules contained in the RRE are: minimum button sizes, criticality level of HMI elements, aspect ratio needs, and resolution thresholds. Based on these rules and the target display characteristics, the display is rendered with the appropriate size, number, arrangement, and resolution of HMI elements. The RREConfig Parser block parses the current and reference display configurations. The RREConfig Builder block based upon the parser results creates the configuration for the current system. APP MANAGER CONTROL controls all the different HMI apps running. RRE STATE MANAGER controls and manages the state of the RRE system. THEME MANAGER does track and support with the various themes. APPS INTERFACE is the API layer through which different apps talk to the RRE. Qt/QML is used for developing the RRE and HMI framework. Qt is cross platform application framework used for developing software applications. QML stands for the Qt Modeling Language it's a user interface markup language.

Fig. 2 illustrates non-limiting examples of content 202, 204, 206, 208, 210 suitable for a variety of displays operated by the system 10. The first-content 202 may be referred to as the reference display or reference content because the HMI is developed using this as a reference design. In contrast, the second-content 204 is larger because the display on which it is shown is larger. The third-content 206 illustrates just few reference screens are shown in the 202, 206 and 208. The fourth-content 208 illustrates another example of a reference screen. The fifth-content 210 illustrates of an example where the third-content 206 is put up on a portrait display to show how content is rearranging itself to cover whole display without needing a new layout to do it again.

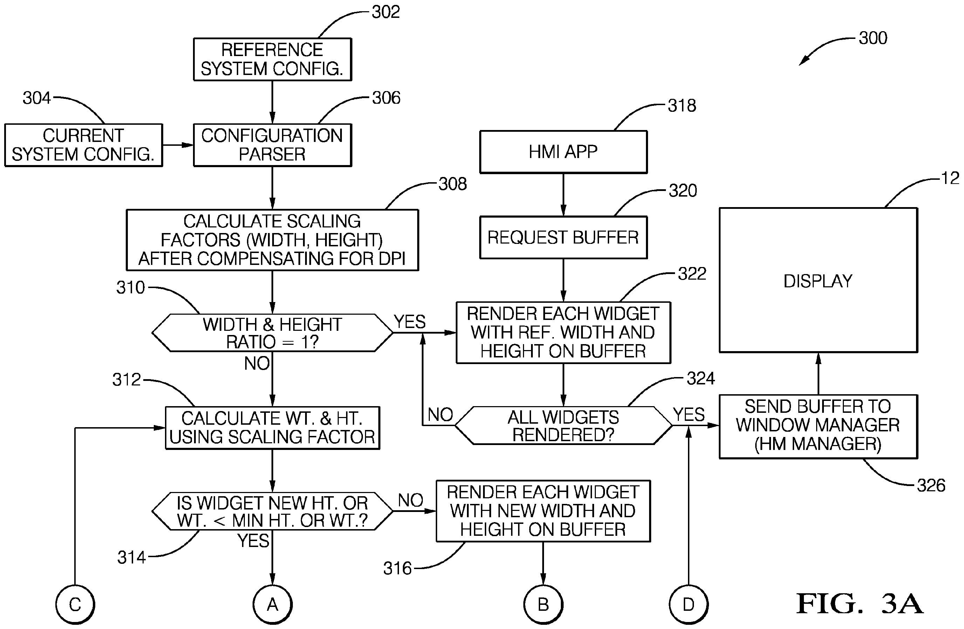

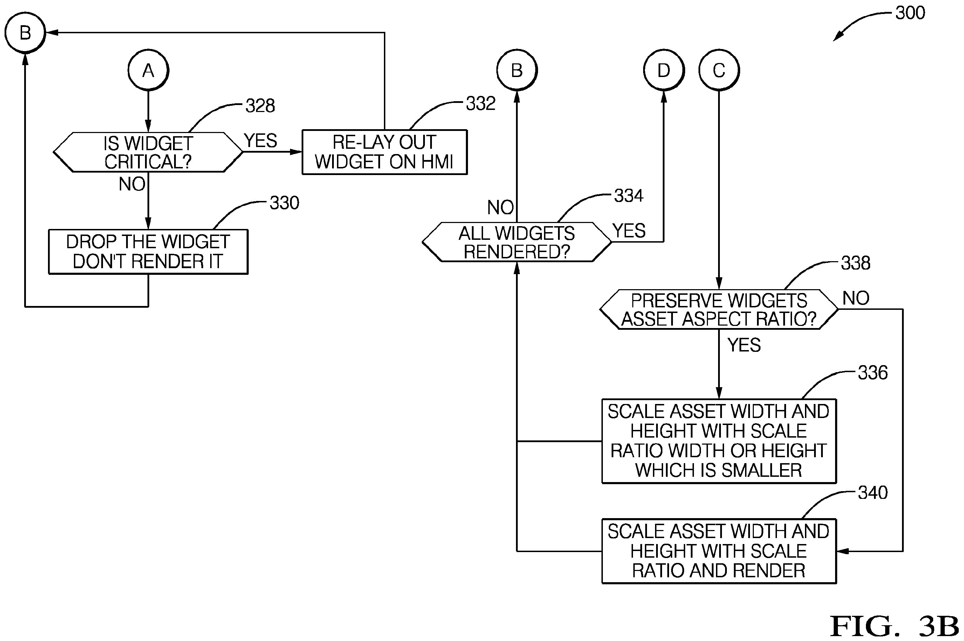

Fig. 3A and 3B in combination illustrate a method 300 of operating the system 10 or the controller 20.

Step 302, REFERENCE SYSTEM CONFIG, specifies the configuration of some "reference" display system. Configuration items include characteristics of a display which may include: screen resolution, screen DPI, screen size.

Step 304, CURRENT SYSTEM CONFIG, indicates the configuration of current display system.

Step 306, CONFIGURATION PARSER, identifies the relevant items from Reference System Config. and Current System Config.

Step 308, SCALING FACTORS, is an algorithm that identifies width and height scaling factors based on differences between Reference System Config. and Current System Config.

Step 310, SCALING CHECK: determines when no adjustment is needed.

Step 312, CALCULATE WIDGET HEIGHT AND WIDTH, determines when the width and height ratio are not 1 which means that the current system is different from the reference and the RRE needs to be used. First, calculate a proposed new width and height for the widgets based on scaling determined in 308. Resizing with or without keeping the Aspect ratio is not limited to just the widgets. Graphical assets like bitmaps, polygons, lines, etc. can also be scaled and resized using the scaling factor. It is also contemplated that the system is able to resize the font size using the scaling factor to make sure the text is not so small as to be unreadable or so big that it looks odd.

Step 314, IS WIDGET NEW HEIGHT OR WIDTH < MIN. HIEGHT OR MIN WIDTH, checks the proposed new size to the minimum allowed width or height for the widget based on the RRE.

Step 316, RENDER EACH WIDGET, may include rendering the widget with new width and new height.

Step 318, HMI APP, provides for long-term storage or provides an HMI application.

Step 320, REQUEST BUFFER, provides for short-term storage or provides an HMI application.

Step 322, RENDER EACH WIDGET WITH REFERENC WIDTH AND REFERENCE HEIGHT ON BUFFER, render without changes using reference.

Step 324, ALL WIDGETS RENDERED?, repeat for all widgets.

Step 326, SEND BUFFER TO WINDOW MANAGER, sends the buffer to Window Manager.

Step 328, IS WIDGET CRITICAL, checks criticality of widget in the RRE.

Step 330, DROP THE WIDGET, removes the widget if below criticality threshold, remove widget from display.

Step 332, RE-LAYOUT WIDGET ON HMI, sets widget back to minimum size, defined for widget and add to display.

Step 334, ALL WIDGETS RENDERED?, checks if all widget are rendered, if yes go to 326 if no go to 312.

Step 336, SCALE ASSET, If widget does need to preserve the aspect ratio check which scaling factor is smaller(width or height) and use that for scaling image so that it preserves the aspect ratio and use as much area of widget as possible].

Step 338, PRESERVE WIDGET ASSET ASPECT RATIO?, after the widget is rendered with new width and height next task is to put a background image if defined. If there is a background defined, check whether widget needs to preserve aspect ratio or not.

Step 340, SCALE ASSET WIDTH AND HEIGHT WITH SCALE RATIO AND RENDER, if widget does not need to preserve aspect ratio scale the image to fit to the widget and render the image as a background to the widget.

Accordingly, a system 10 for configuring a display as a Human Machine Interface suitable to use in an automated vehicle, a controller 20 for the system 10 and a method 300 of operating the system 10 is provided. These are provided so that what is shown on the display 12 can be optimized for the display-resolution 14 and the display-size 16 of the display 12.

While this invention has been described in terms of the preferred embodiments thereof, it is not intended to be so limited, but rather only to the extent set forth in the claims that follow.

## Claims

1. A system (10) for operating a display (12) as a Human Machine Interface suitable to use in an automated vehicle, said system (10) comprising:
a display (12) positioned in a vehicle so as to be viewable by an occupant of the vehicle, said display (12) **characterized by** a display-resolution (14) and a display-size (16); and
a controller (20) in communication with the display (12), said controller (20) configured to
determine how many widgets (24) can be shown on the display (12) based on the display-size (16),
determine a list of selected-widgets (24) from a list of possible-widgets (24), wherein each of the possible-widgets (24) is **characterized by** a critical-factor, and the selected-widgets (24) have a critical-factor greater than critical-threshold,
determine a configuration of each selected-widget based on the display-resolution (14), wherein the configuration includes an aspect-ratio, and
operate the display (12) to show the selected-widgets (24) to the occupant.

2. The system (10) in accordance with claim 1, wherein the controller (20) scales graphical-assets and the selected-widgets (24) to fit on the display (12).

3. The system (10) in accordance with claim 1 or 2, wherein the system (10) includes a wireless connection (22) used to communicate with a portable display (12), and the controller (20) is configured to determine what is displayed on the remote display (12) based on display-size (16) and display-resolution (14) of the remote display (12).
